# EUROPEAN PATENT APPLICATION

(11) **EP 0 838 605 A1**
(43) Date of publication of application: **29.04.1998**
(21) Application number: 96830543.3
(22) Date of filing: 23.10.1996
(51) Int. Cl.: F16G 1/06, B29D 29/00

(54) **Flat belt and process for the manufacture of same**

(71) Applicant: Sampla Belting S.p.A., 20127 Milano (IT)
(72) Inventor: Airaudi, Natale, 16060 Lozzolo (VC) (IT)
(74) Representative: Righetti, Giuseppe

(57) **Abstract**

It is disclosed a flat belt (1) comprising a main layer (2) and a plurality of reinforcing threads (3) incorporated into the main layer and directed parallelly to each other in the longitudinal-extension direction of the belt, as well as a manufacturing process for said flat belt (1) consisting in submitting thermoplastic material adapted to define the main layer (2) to extrusion and carrying out incorporation of the reinforcing threads (3) into the main layer, simultaneously with the extrusion process.

## Description

The present invention relates to a flat belt.

It is known that flat belts used for transmitting a rotatory motion generally consist of a plurality of layers of different materials integral with each other.

In particular, flat belts of known type, even when of very reduced thickness, generally are comprised of a central layer, consisting for example of plastic material, into which a reinforcing layer made up of a textile (natural or synthetic) fibre fabric is incorporated, which fabric therefore has transverse weft yarns of polyester material and the like for example, and longitudinal warp yarns of a high-toughness material.

The above mentioned flat belts have many limits and drawbacks.

First of all, they are not characterized by an actual bearable load under traction of a sure and controllable value, because in each transverse section the fibres of the reinforcing layer are not evenly aligned, but imprecisely spaced apart from each other. As a result, the availability of belts of a given tensile stress or in any case a tensile stress varying within a sufficiently narrow range about a theoretical value is impossible.

In addition, since known flat belts are generally obtained by longitudinally cutting ribbons or strips into which said reinforcing fabric is incorporated, they have frayed parts on their side edges, that is cut and projecting threads are present which, while cooperating no longer in performing a mechanical reinforcement action in the belt, practically cause weakening of said belt that is a reduction in the tensile stress features of same.

Furthermore, said frayed parts need an additional operating step so as to conveniently trim the side edges of each belt.

Under this situation the technical task underlying the present invention is to provided a flat belt and a manufacturing process of same which is capable of substantially obviating the above mentioned drawbacks.

Within the scope of this technical task, it is an important aim of the invention to provide a flat belt and a manufacturing process of same which enable even features of real strength-traction power substantially corresponding to a theoretical fixed value to be achieved in all sections.

Another important aim of the invention is to provide a belt and a manufacturing process of same that during the longitudinal cutting steps of the multilayered strips or ribbons forming the semi-finished product out of which the belts are made, do not give rise to frayed parts and ravellings on the side edges of the belt themselves.

The technical task mentioned and the aims specified are substantially achieved by a flat belt and a manufacturing process of same as described in the appended claims.

Description of some preferred embodiments of a belt and the related manufacturing process in accordance with the invention is now given hereinafter, by way of non-limiting examples, with reference to the accompanying drawings, in which:
- Figs. 1, 2, 3 show a section of three different embodiments of a belt in accordance with the invention, the thickness of which has been magnified for the sake of clarity;
- Fig. 4 is a flow chart diagrammatically showing the process of the invention;

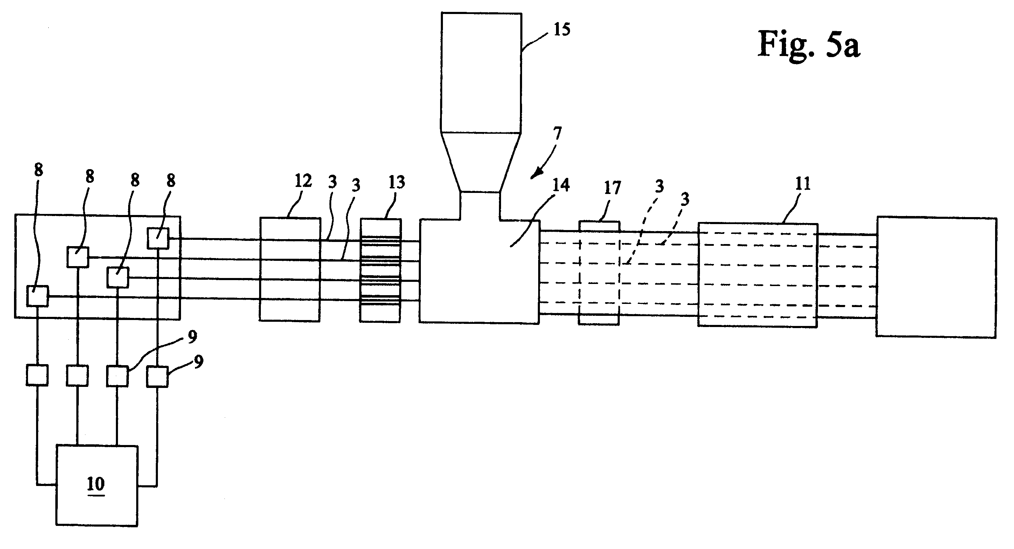

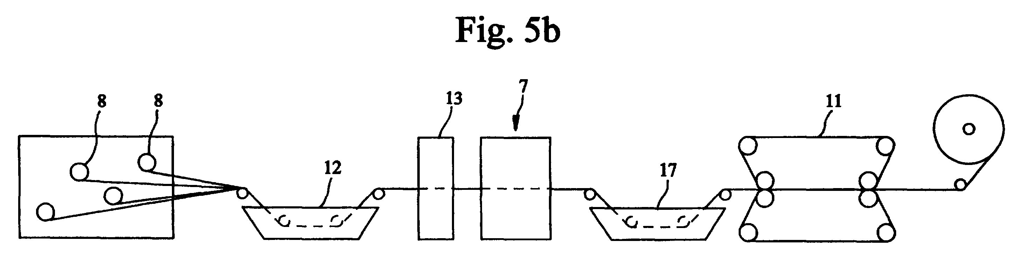

- Figs. 5a and 5b are a plan view and an elevational side view respectively, of a plant adapted to perform some steps of the process illustrated in Fig. 4; and

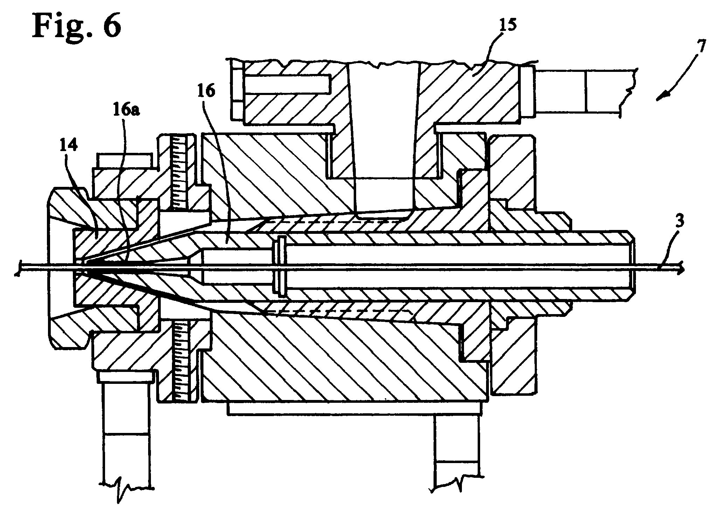

- Fig. 6 is a longitudinal sectional view of an extrusion unit being part of the plant shown in Figs. 5a and 5b.

With reference to the drawings, the flat belt of the invention has been generally identified by reference numeral 1.

It comprises a main layer 2, preferably of thermoplastic material and, in an original manner, a plurality of reinforcing threads 3 incorporated in the main layer 2 and directed parallely to each other in the longitudinal-extension direction of the belt 1.

The reinforcing threads are made up of a high-toughness material, consisting for example of twisted fibres and advantageously have a coating 3a of thermoplastic material for example, adapted to promote adhesion of said threads to the matrix material in which they are buried, that is to the main layer 2.

Advantageously, the reinforcing threads 3 are disposed at a central portion 2a of the main layer 2, spaced apart the same distance from each other, so that between the side edges 1a of the belt 1 and the outermost threads 3 sufficiently wide border areas 2b of the main layer 2 are interposed so as to surely avoid ravellings due to said threads emerging from the main layer 2, should steps involving longitudinal cutting of said layer take place.

In addition, the reinforcing threads 3 are incorporated in the main layer 2 in a pretensioning state which is as much as possible uniform and identical for all of them; furthermore, they may be disposed either in a single plane parallel to the main faces 1b of the belt 1, or in several planes, depending on the main layer thickness and the reinforcing requirements of same, in accordance with the intended uses.

The main layer 2 is usually enclosed between two outer ribbon-like layers 4 of rubber material, adhering to opposite bases 2c of said main layer 2 and connected to the latter in an irremovable manner by interposition of films 5 of adhesive material, consisting of glue or polyurethane resin for example.

In this way a belt consists of a multilayered ribbon.

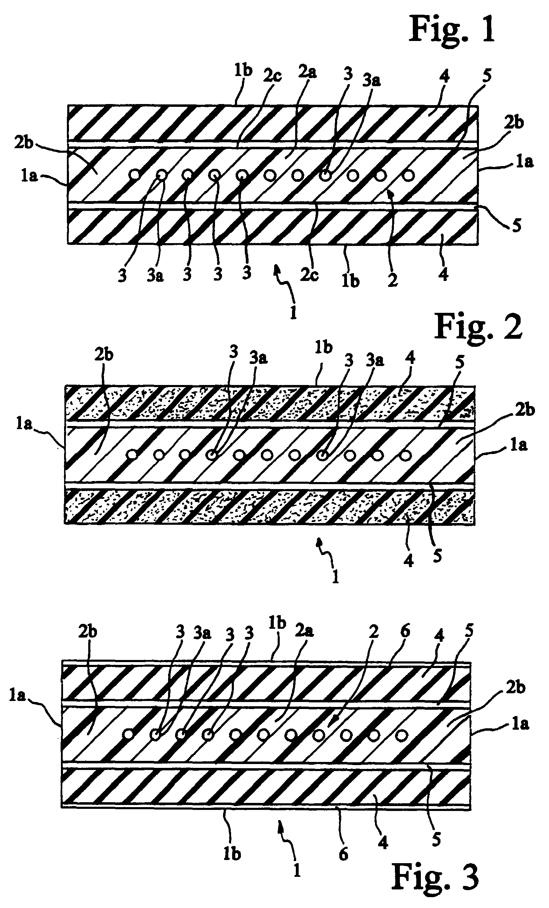

In order to disperse the static electricity that is externally formed on the belt 1, at least one of the outer layers 4 may be of a material adapted to disperse said electricity, of a conventional type and therefore known per se (see Fig. 2). In alternative, one or both of said outer layers 4 can be coated with a covering layer 6 of electrically conductive material (see Fig. 3).

Finally one of the reinforcing threads 3, the central one for example, may be made up to advantage of an electrically conductive material in order to define a guide trace for the apparatuses adapted to carry out the longitudinal cutting of the main layer or the multilayered ribbon so as to ensure accuracy and evenness in the cutting operation.

The invention carries into effect a new process being an integral part of the present invention too.

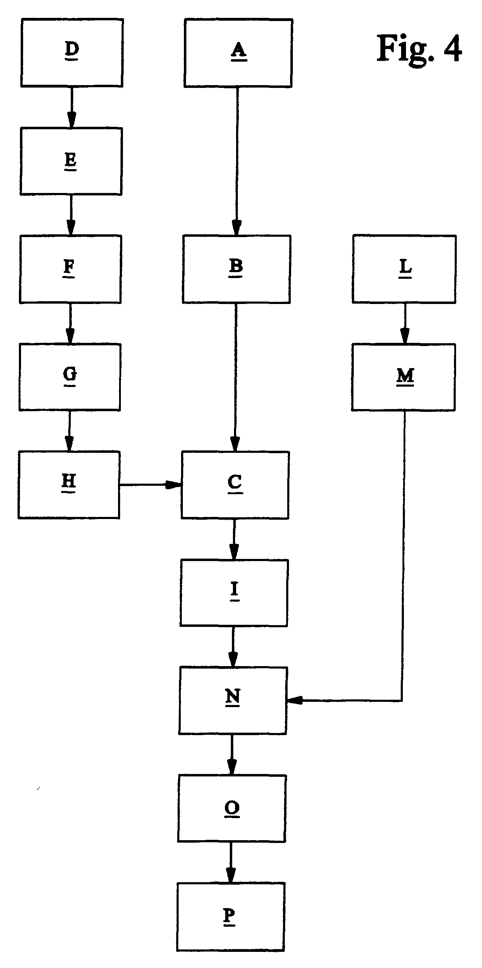

It consists in conveniently arranging thermoplastic material in the form of granules for examples (step A in Fig. 4), in submitting this material after drying and heating (step B) to extrusion (step C) in an extrusion unit 7 so as to form a strip of a width adapted to preferably define a plurality of main layers 2 disposed side by side, each corresponding to the intended width of a belt, and in carrying out incorporation, during the same extrusion step (step C) of a plurality of reinforcing threads 3 into said main layers, said threads 3 being directed parallelly to each other in the longitudinal direction of said extruded strip, that is of the belts generated thereby.

Therefore the process, simultaneously with arrangement and extrusion of the above mentioned thermoplastic material, contemplates a series of working steps relative to the reinforcing threads. More particularly, after arranging said fibre threads (step D) and carrying out twisting of same if necessary, (step E), the threads themselves are wound for continuous feeding (step F) on appropriate reels subjected to controlled braking by appropriate adjustment members (consisting for example of speedometer dynamos or other similar members) connected to a control unit 10.

Practically, the reinforcing threads 3 are pulled along, together with the main layer into which they have been incorporated in the extrusion step, by a traction unit 11 disposed downstream of the extrusion unit 7 and submitted to tension control by the controlled braking of reels 8 in a manner adapted to cause said threads to reach a pretensioning state, when incorporation has been completed, in which the tensioning extent is substantially uniform and in any case varying within a very narrow tolerance range.

Downstream of the supply reels 8, the reinforcing threads are advantageously surface-covered with a coating of thermoplastic material (step G) adapted to improve adhesion of same to the main layer in which they are incorporated, by immersion in a coating tank 12 for example.

A precise positioning of the reinforcing threads 3 in the main layer 2 being extruded is achieved by accomplishing feeding paths for said threads which are exactly guided both upstream of the extrusion unit 7 (step H) by an appropriate comb-shaped guide unit 13 for example, and during the incorporation operation in the extrusion unit 7 itself. More particularly, said extrusion unit has an extrusion die 14 into which the thermoplastic material from a hopper 15 flows; the die is adapted to house a plurality of internally hollow guide bodies 16 provided each, at the respective end, with a nozzle 16a precisely gauged on the diameter of the reinforcing thread 3 passing therethrough.

The uniform pretensioning to which the reinforcing threads 3 are submitted helps in improving alignment of same and therefore also their regular positioning when incorporated in a main layer of the belt.

Downstream of the extrusion unit 7, the main layer 2 is preferably submitted to a surface treatment involving grinding and washing (step I) in a washing tank 17.

Generally flat belts are externally comprised of a pair of ribbon-like layers 4 of a rubber material adapted to increase the friction coefficient of said belts. For the porpose, said ribbon-like layers 4 are conveniently arranged (step L) and subsequently one face of them is coated with a film of adhesive material (step M), glue or polyurethane resin for example.

Afterwards said ribbon-like layers are matched with opposite bases of the main layer (step N), so that a multilayered ribbon is obtained.

The multilayered ribbon is then submitted both to a longitudinal-cutting operation so as to slit it into several longitudinal portions each corresponding to the width of a belt, and to a transverse cutting operation (step O) to form the strips defining each individual belt and to obtain saw-toothed end flaps for example, adapted for junction.

Finally, said strips are closed to form a loop by joining said end flaps (step P), thereby obtaining the intended flat belts.

The invention achieves important advantages.

First of all, incorporation of the reinforcing threads each maintained at a strictly constant tension, into the main layers of the belts during the extrusion process of same, enables an absolutely uniform pretensioning to be achieved by said threads when incorporation has been completed. In this manner, when the belt is submitted to tensile stress, all threads undergo the same stresses and cooperate homogeneously in resisting the forces that are transmitted in the belt, thereby avoiding breaking of some of them. It is pointed out that the use of high-toughness threads which therefore have a reduced ultimate elongation, makes it absolutely indispensable to incorporate said threads into the belts in a uniform tensioning state so that they can reach the same length when submitted to identical stresses lower than the breaking stresses.

In addition, the absolutely precise positioning of the reinforcing threads within a belt also helps in making all belt sections quite identical with each other as regards strength and traction features. The real loads to which a belt in accordance with the invention can be submitted are therefore sure and foreseeable, as they are substantially coincident with those theoretically calculated.

It is to note that the reinforcing-thread arrangement in a central portion of the main layer far from the belt edges avoids breaking of said reinforcing threads during the steps involving longitudinal cutting of the multilayered ribbons intended for forming the belts and, as a result, occurrence of the above described drawbacks such as ravellings, etc.

It will be also recognized that the use of one or more reinforcing threads of electrically conductive material to be employed for a precise guide of the cutting apparatus, further reduces the risks of accidental breakages of said threads.

It is to point out that the process of the invention enables achievement of a flexible production. In fact, different types of belts can be produced by varying the number of the reinforcing threads or the strength features of same by means of few modifications in the belt structure.

Finally the production costs of the flat belts can be greatly reduced because the required equipments and plants for carrying into effect the manufacturing process of the invention are of normal use and limited costs.

## Claims

1. A flat belt (1) comprising at least one main layer (2), characterized in that it comprises a plurality of reinforcing threads (3) incorporated into said main layer (2) and directed parallelly to each other in the longitudinal-extension direction of the belt (1).

2. A belt according to claim 1, characterized in that said reinforcing threads (3) are incorporated in a central portion (2a) of said main layer (2).

3. A belt according to claim 1, characterized in that said threads (3) are such arranged as to be substantially spaced apart the same distance from each other.

4. A belt according to claim 1, characterized in that said threads (3) are disposed in at least one plane parallel to a main face (1b) of the belt (1).

5. A belt according to claim 1, characterized in that said threads (3) are incorporated in said main layer (2) in a pretensioning state.

6. A belt according to claim 5, characterized in that said pretensioning state is substantially the same for all said reinforcing threads (3).

7. A belt according to claim 1, characterized in that said main layer (2) is obtained by extrusion of thermoplastic material and said reinforcing threads (3) are incorporated therein during the extrusion operation.

8. A belt according to claim 1, characterized in that said reinforcing threads (3) comprise a coating (3a) adapted to promote adhesion of same to the material of said main layer (2).

9. A belt according to claim 8, characterized in that said coating (3a) of the reinforcing threads (3) is made of a thermoplastic material.

10. A belt according to claim 1, characterized in that it comprises two outer ribbon-like layers (4) of rubber material adhering to opposite bases (2c) of said main layer (2) and films of adhesive material (5) interposed between each said outer layer (4) and the main layer (2).

11. A belt according to claim 10, characterized in that said films (5) of adhesive material are made of polyurethane resin.

12. A belt according to claim 10, characterized in that the rubber material of at least one of said outer layers (4) is of a type adapted to disperse static electricity.

13. A belt according to claim 10, characterized in that it comprises a covering layer (6) of electrically conductive material for at least one of said outer layers (4) of rubber material.

14. A belt according to claim 1, characterized in that at least one of said reinforcing layers (3) is made of an electrically conductive material.

15. A manufacturing process for a flat belt (1), characterized in that it at least consists in:
- submitting to extrusion (C) a thermoplastic material adapted to define a main layer (2) of at least one said belt; and
- carrying out incorporation into said main layer, simultaneously with said extrusion (C), of a plurality of reinforcing threads (3) directed parallelly to each other in the longitudinal-extension direction of the belt.

16. A process according to claim 15, characterized in that it further consists in submitting said reinforcing threads (3) to a tension control (F) at least during said thread incorporation in the main layer (2), so as to determine a pretensioning state of the reinforcing threads when incorporation has been completed.

17. A process according to claim 15, characterized in that provision is also made for a continuous feeding of said reinforcing threads (3) and for a guided thread-feeding step (H) at least during said thread incorporation, so as to determine a precise positioning of the threads in said main layer.

18. A process according to claim 17, characterized in that a guided thread-feeding step (H) is also provided upstream of the step of incorporating the reinforcing threads.

19. A process according to claim 16, characterized in that said tension control (F) is made by disposing said reinforcing threads on supply reels (8) subjected to controlled braking, upstream of said incorporation step.

20. A process according to claim 15, characterized in that it consists in submitting said reinforcing threads (3), before said incorporation step, to a working step involving a surface-coating operation (G).

21. A process according to claim 15, characterized in that it consists in submitting said main layer (2), downstream of said step of incorporating the reinforcing threads (3), to a grinding surface-treatment and to washing (I).

22. A process according to claim 21, characterized in that provision is made for a step (L) of arranging a pair of ribbon-like layers of rubber material (4), a step (M) of coating a face of each of said ribbon-like layers (4) with a film of adhesive material (5) and a step (N) of coupling said ribbon-like layers (4) to opposite bases (2c) of said main layer (2), after said grinding surface-treatment and washing (I), so as to obtain a multilayered ribbon.

23. A process according to claim 22, characterized in that it comprises a step (O) of longitudinally cutting said multilayered ribbon, so as to divide it into several longitudinal portions each corresponding to the width of a flat belt, a step of transversely cutting said longitudinal portions so as to form the strips defining each individual belt and a final step (P) of joining the end flaps of said strips together so as to form a loop.
